# EUROPÄISCHE PATENTANMELDUNG

(11) **EP 1 116 932 A2**
(43) Veröffentlichungstag der Anmeldung: **18.07.2001**
(21) Anmeldenummer: 00126646.9
(22) Anmeldetag: 05.12.2000
(51) Int. Cl.: G01B 7/34

(54) **Messgerät und Verfahren zun Vermessen von Strukturen auf einem Substrat**

(30) Priorität: 14.01.2000 DE 10001239; 14.01.2000 US 176284 P
(71) Anmelder: Leica Microsystems Wetzlar GmbH, 35578 Wetzlar (DE)
(72) Erfinder: Rinn, Klaus, 35452 Heuchelheim (DE)
(74) Vertreter: Reichert, Werner F., Dr.

(57) **Zusammenfassung**

Es wird ein Messgerät (100) und ein Verfahren zum Vermessen von Strukturen (19) auf einem Substrat (9) beschrieben. Das Messgerät (100) weist ein Tragelement (15) auf, das gegenüber dem Substrat (9) vorgesehen ist. Am Tragelement (15) ist eine nicht-optische Messeinrichtung (23) angebracht, mit welcher eine Vermessung der Strukturen (19) des Substrats (9) unter Umgebungsluftdruck erfolgt. Die nicht-optische Messeinrichtung (23) kann z.B. als ein AFM (24) oder ein Elektronenstrahlobjektiv (40) ausgebildet sein. Ferner kann zusätzlich zu der nicht-optischen Messeinrichtung (23) ein optisches Objektiv (10) vorgesehen sein, das zum schnellen Auffinden und Bestimmen der Grobposition von Strukturen (19) auf dem Substrat (9) dient.

## Beschreibung

Die Erfindung betrifft ein Messgerät zum Vermessen von Strukturen auf einem Substrat.

Des Weiteren betrifft die Erfindung ein Verfahren zum Vermessen von Strukturen auf einem Substrat, wobei die nicht-optische Messung unter normalen Luftdruckbedingungen durchgeführt wird.

Die Auflösung bisheriger und zukünftiger rein optischer Messsysteme wird eine Grenze im 100nm Bereich erreichen. Für die Genauigkeitsanforderungen bei Halbleitersubstraten der aktuellen Generation (unter 10 nm) ist eine Auflösung sehr viel kleiner als die Strukturdimensionen notwendig. Selbst bei aktuellen photolithographischen Masken, hier haben die Masken bzw. Substrate eine 5-fache Vergrößerung, stößt die optische Messtechnik an ihre Grenzen. Das gilt umso mehr für zukünftige Lithographieverfahren, welche eine 1 zu 1 Abbildung haben können, sowie das Vermessen von Wafern. Nichtoptische Systeme könnten eine stark verbesserte Auflösung erreichen. Eine hohe Durchsatzrate und eine benutzerfreundliche Handhabe sind für den Erfolg der neuen Systeme unbedingt erforderlich.

Ein Messsystem, das ein optisches mit einem nichtoptischen Verfahren kombiniert, ist in der japanischen Offenlegungsschrift 09/119825 offenbart. Das Messsystem besteht aus einer großen Vakuumkammer, in der die Koordinaten der Probe sowohl mit einem optischen Verfahren als auch mit einem nichtoptischen Verfahren vermessen werden. Mit einem Lichtstrahl und einem Photodetektor wird die Absolutkoordinate I eines Referenzpunktes auf der Probe bestimmt, der vom Ursprung um einen bestimmten Betrag entfernt ist. Die Relativkoordinate L-I, bezogen auf die Absolutkoordinate, wird mittels eines Elektronenstrahls und einem Detektor für geladene Teilchen bestimmt. Die Probe wird innerhalb der Vakuumkammer mittels eines Schlittens von der optischen Messstelle zur Elektronenstrahl-Messstelle verfahren. Ein Interferometer überwacht und kontrolliert den Verfahrweg innerhalb der Vakuumkammer. Dieses System hat einen entscheidenden Nachteil: die gesamte Messung muss im Vakuum durchgeführt werden, wodurch sich für den Benutzer eine umständliche Handhabung ergibt. Der Durchsatz bei diesem System ist ebenfalls durch die Vakuumkammer beschränkt.

Ein rein optisches Messgerät zur Bestimmung der Lage von Strukturen auf einen transparenten Substrat ist in der deutschen Patentanmeldung DE-A-198 19 492.7-52 offenbart. Dabei ist die Lage einer Struktur auf dem Substrat durch den Abstand einer Kante der Struktur relativ zu einem Bezugspunkt definiert. Das Messgerät besteht aus einer Auflicht-Beleuchtungseinrichtung, einer Abbildungseinrichtung und einer Detektoreinrichtung für die abgebildeten Strukturen und einem senkrecht relativ zur optischen Achse interferometrisch verschiebbaren Messtisch. Zur Aufnahme des Substrats ist der Messtisch als offener Rahmen ausgebildet. Unter dem Messtisch ist eine Beleuchtungseinrichtung vorgesehen, deren optische Achse mit der optischen Achse der Auflicht-Beleuchtungseinrichtung fluchtet.

Der Erfindung liegt die Aufgabe zugrunde ein Messgerät zu schaffen, das reproduzierbare Messergebnisse von sehr kleinen Strukturen auf einem Substrat zukünftiger Strukturdimensionen liefert, wobei Benutzerfreundlichkeit und eine hohe Durchsatzrate gewährleistet sein sollen.

Die Aufgabe wird gelöst durch ein Messgerät, das dadurch gekennzeichnet ist, dass ein Tragelement gegenüber dem Substrat vorgesehen ist, dass eine nicht-optische Messeinrichtung am Tragelement angebracht ist und Umgebungsluftdruck zwischen der nicht-optischen Messeinrichtung und dem Substrat vorherrscht.

Eine weitere Aufgabe der Erfindung ist es, ein Verfahren zu schaffen, das reproduzierbare Messergebnisse von sehr kleinen Strukturen auf einen Substrat zukünftiger Strukturdimensionen liefert, wobei Benutzerfreundlichkeit und eine hohe Durchsatzrate gewährleistet sein sollen.

Diese Aufgabe wird gelöst durch ein Verfahren, das die folgenden Schritte umfasst:
a) Anfahren der zu vermessenden Struktur (19) unter Umgebungsluftdruck,
b) Ermitteln einer Grobposition der Struktur (19) auf dem Substrat,
c) Vermessen der angefahrenen Struktur (19) mit einer nicht-optischen Messeinrichtung (23) unter Umgebungsluftdruck, und
d) Bestimmen der exakten Position und Ausdehnung der Struktur (19).

Vorteilhafte Weiterbildungen ergeben sich aus den Merkmalen der Unteransprüche.

Mit der erfindungsgemäßen Ausgestaltung des Messgerätes und der Verfahrens ist es möglich reproduzierbare Messergebnisse zu liefern. Ein besonders kostengünstiger und benutzerfreundliche Effekt ergibt sich daraus, dass die nicht-optische Messung unter Umgebungsluftdruck durchgeführt wird. Als Umgebungsluftdruck wird der natürlich vorhandene Luftdruck angesehen, dies betrifft auch den Luftdruck in einer Klimakammer, die Luftfeuchte und Temperatur, jedoch nicht den Luftdruck, regelt. Besonders deutlich wird dies, wenn die angefahrene Struktur mit einem Elektronenstrahl, der mit einem Elektronenstrahlobjektiv generiert wird, vermessen wird. Hier ist es dann nicht erforderlich, dass das gesamte Messgerät von einer Vakuumkammer umgeben ist, um die Messung durchführen zu können.

Die nicht-optische Messung kann z.B. mit einem AFM (Atomic Force Microscope) durchgeführt werden. Der Durchsatz kann mit einem zusätzlichen optischen Mikroskop, bzw. einem entsprechenden Objektiv, gesteigert werden. Dabei macht man sich zunutze, dass die Messung mit dem optischen Mikroskop deutlich schneller erfolgt als mit der nicht-optischen Messeinrichtung. Dazu wird mit dem Objektiv die Stelle des Substrats ausgewählt, die man genauer untersuchen bzw. vermessen will. Das AFM misst dann maximal in dem durch das Objektiv ausgewählten Messfenster.

Eine starre Verbindung, hier in Form des Tragelements, zwischen dem AFM und dem Objektiv ergibt eine starre Koppelung dieser beiden Bauteile. Ein Interferometer ermöglicht eine genaue Bestimmung der Position des Tragelements und somit auch der am Tragelement angeordneten Bauteile. So kann das AFM in dem optisch gefundenen Messfenster exakt positioniert werden. Es hat sich als vorteilhaft erwiesen, wenn die Struktur auf dem Substrat mit einem Objektiv angefahren wird. Die erforderliche Scharfstellung kann mit einem Autofokussystem erfolgen. Bei dem hier durchgeführten Messverfahren werden die Kanten von den Strukturen auf dem Substrat bestimmt. Durch das optische Anfahren der zu messenden Kanten, kann das Messfenster für das AFM sehr eng um die zu messenden Kanten festgelegt werden. Der Messtisch oder auch die Trägerplatte wird dann entsprechend verfahren, damit die zu messende Struktur im Messfenster unter dem AFM zu liegen kommt. Während der AFM-Messung wird z.B. die Abweichung des Messtisches von der Sollposition mit einem Interferometer bestimmt.

Ein wichtiges Merkmal für die Positionsmessung auf großen Substraten ist, wie bereits oben erwähnt, die starre Kopplung zwischen dem Antastsystem (Objektiv, AFM) und dem Interferometer. Für diesen Aspekt wäre eine horizontale Bewegung (in der X/Y Ebene) der AFM-Antastspitze eher negativ. Die Genauigkeit der Messung könnte noch gesteigert werden, wenn die Spitze des AFM möglichst unbeweglich ist. Hier wird das Substrat zusammen mit dem Messtisch verfahren und dabei vollflächig mit dem AFM abgetastet. Ein solches Messverfahren wirkt sich aber dann nachteilig auf die Durchsatzrate aus.

Ein weiteres nicht-optisches Verfahren könnte mit einem Elektronenstrahl realisiert werden. Um auch bei der Anwendung eines Elektronenstrahls zu gewährleisten, dass die Messung nicht im Vakuum durchgeführt werden muss, wird ein Elektronenstrahlobjektiv verwendet, das durch dessen mikroskopischen Aufbau im Kleinen eine herkömmliche elektronenmikroskopische Säule realisiert. Auch hier ist eine vorteilhafte Kombination mit einem herkömmlichen Objektiv denkbar. Durch das Objektiv kann das Anfahren an die zu vermessenden Stellen des Substrats beschleunigt werden. Dies reduziert die Zeit der Einwirkung des Elektronenstrahls auf das Substrat. Dadurch wird die bereits geringe Aufladung bei Systemen, die ausschließlich mit Elektronenstrahlobjektiven arbeiten, weiter reduziert, da ein großer Teil des Messvorgangs (z.B. Fokussieren, Feinjustage des Messfensters, etc.) optisch ist. Die Vermessung mit einem Elektronenstrahl kann die Auflösung eines Messsystems im Vergleich zu einem herkömmlich optischen Messsystem erheblich steigern.

In der Zeichnung sind vier Ausführungsformen des erfindungsgemäßen Messgerätes schematisch dargestellt und werden anhand der Figuren nachfolgend beschrieben. Dabei zeigen
- Fig. 1: eine erste Ausführungsform des Messgeräts, bei dem das Substrat im Durchlicht beleuchtet wird und wobei die verfeinerte Messung mittels eines AFMs durchgeführt wird,
- Fig. 2: eine zweite Ausführungsform des Messgeräts, bei dem das Substrat im Auflicht beleuchtet wird und wobei die verfeinerte Messung mittels eines AFMs durchgeführt wird,
- Fig. 3: eine dritte Ausführungsform des Messgeräts, bei dem das Substrat im Durchlicht beleuchtet wird und wobei die verfeinerte Messung mittels eines Elektronenmikroskops durchgeführt wird, und
- Fig. 4: eine vierte Ausführungsform des Messgeräts, bei dem das Substrat im Auflicht beleuchtet wird und wobei die verfeinerte Messung mittels eines Elektronenmikroskops durchgeführt wird.

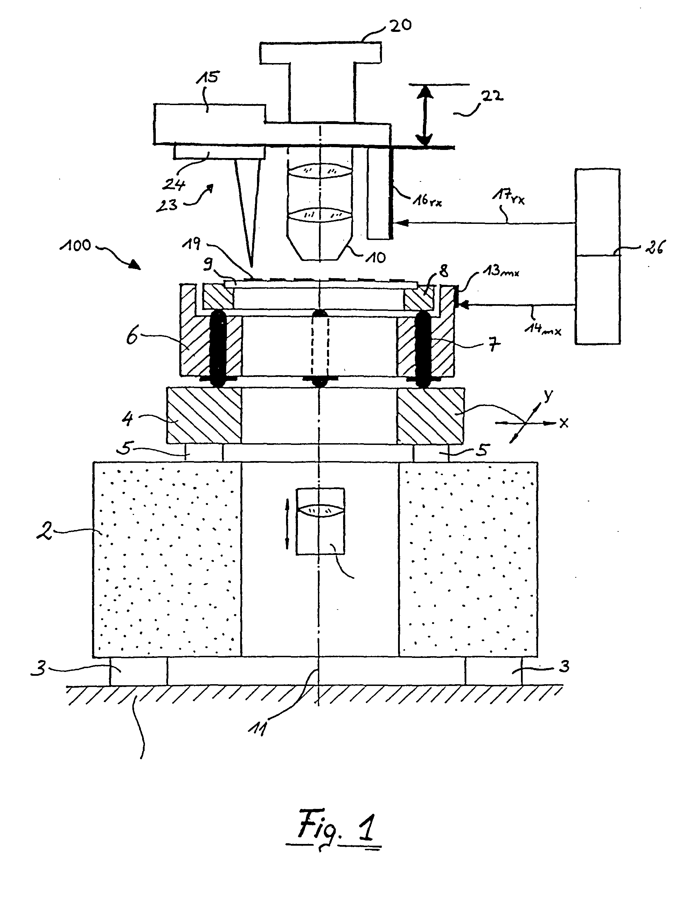

Das in Fig. 1 dargestellte hochgenaue Messgerät 100 besteht aus einem Granitblock 2, der auf Füßen 3 schwingungsgedämpft gelagert ist. Ein Messtisch 4 stützt sich auf Luftlagern 5 auf dem Granitblock 2 ab. Andere Lager sind ebenfalls verwendbar, die eine gleichmäßige und hochgenaue Verschiebung gewährleisten können. Der Messtisch 4 ist horizontal in zwei zueinander senkrechten Richtungen, hier durch zwei Pfeile x und y angedeutet, in den Richtungen x und y gleitend verschiebbar. Die Antriebe zur Erzielung der Verschiebung sind hier nicht dargestellt. Auf dem Messtisch 4 ruht ein Spiegelkörper 6. Durch den Spiegelkörper 6 sind senkrecht drei Bolzen 7 mit abgerundeten Enden spannungsfrei hindurchgeführt, die nach oben und unten überstehen. Mittels der Bolzen 7 stützt sich der Spiegelkörper 6 auf dem Messtisch 4 ab. Die Bolzen 7 sind so angeordnet, dass sie eine stabile Drei-Punkt-Auflage des Spiegelkörpers 6 auf dem Messtisch 4 bewirken, hier also zwei Bolzen links und rechts vorne in der Schnittebene, der dritte Bolzen hinten in der Mitte. Um die Aufstandsfläche optimal klein zu halten, sind die unteren Enden der Bolzen 7 als Kugelfläche gestaltet. Auf den oberen Enden der Bolzen 7 liegt eine Aufnahme 8 mit einer rahmenförmigen Vertiefung auf, in die ein Substrat 9 mit Strukturen 19 aufgelegt ist. Es ist auch möglich, das Substrat 9 direkt auf die Bolzen 7 aufzulegen. In den Spiegelkörper 6 sind die beiden Messspiegel 13ₘₓ ,13_{my} (letzterer ist nicht dargestellt) für die Positionsbestimmung mittels eines Interferometers 26 in der x- und der y-Achse des Messtischs 4 integriert. In diesem Beispiel sind sie direkt auf das Material des Spiegelkörpers 6 aufgedampft. Andere Möglichkeiten zur Erzielung einer spiegelnden Fläche sind denkbar und dem Fachmann hinlänglich bekannt. Auf den Messspiegel 13ₘₓ am Spiegelkörper 6 ist ein der x-Achse zugeordneter Interferometer-Messstrahl 14ₘₓ gerichtet, der zur interferometrischen Bestimmung der x-Position des Messtischs 4 dient. An der rückwärtigen Außenseite des Spiegelkörpers 6 ist ein (hier nicht dargestellter) Messspiegel 13_{my} integriert. Auf diesen ist ein der y-Achse zugeordneter (ebenfalls nicht dargestellter) Interferometer-Messstrahlengang 14_{my} gerichtet, der zur interferometrischen Bestimmung der y-Position des Messtischs 4 dient.

Ein Objektiv 10 das eine optische Achse 11 definiert, ist auf die Oberfläche des Substrats 9 gerichtet. Unterhalb des Substrats 9 ist auf der optischen Achse 11 ein Kondensor 12 verschiebbar angeordnet, der bei Bedarf eine Durchlichtbeleuchtung erzeugt. Um diese Durchlichtbeleuchtung zu ermöglichen, sind der Granitblock 2, der Messtisch 4, der Spiegelkörper 6 und die Aufnahme 8 mit rahmenförmigen Öffnungen um die optische Achse 11 ausgestattet. In den Granitblock 2 ist eine Beleuchtungseinrichtung 12 eingesetzt, die aus einem höhenverstellbaren Kondensor 12a und einer Lichtquelle 12b besteht. Als Lichtquelle 12b kann z.B. auch die Austrittsfläche eines Lichtleiters vorgesehen sein. Der Kondensors 12 fluchtet mit der optischen Achse 11 des Objektivs 10. Die Höhenverstellung des Kondensors 12 mit Lichtquelle 12b dient der Anpassung der auf die Struktur 9 zu richtenden Beleuchtungsstrahlen an unterschiedliche optische Dicken verschiedener Substrate 8.

Das Objektiv 10 ist auf einem Tragelement 15 angebracht, an dem ein Referenzspiegel 16ᵣₓ für die interferometrische x-Positionsbestimmung des Messtischs 4 befestigt. Er befindet sich in einem starren Abstand zu der optischen Achse 11 des Objektivs 10. Auch für die interferometrische Positionsbestimmung der y-Achse ist ein Referenzspiegel 16_{ry} angebracht, der in dieser Figur nicht dargestellt ist. Ausgehend vom Interferometer 26 ist auf den Referenzspiegel 16ᵣₓ ein Referenzstrahlengang 17ᵣₓ für die x-Achse und auf den Referenzspiegel 16_{ry} ein Referenzstrahlengang 17_{ry} für die y-Achse gerichtet. Auf dem Tragelement 15 ist in der optischen Achse 11 ein Positionsdetektor 20 vorgesehen. Dieser Positionsdetektor 20 kann in Form einer CCD-Camera oder eines Helligkeitsdetektors ausgebildet sein. Weiterhin ist mit dem Tragelement 15 ein Fokuspositionsgeber 22 verbunden, der die Fokusposition des Objektivs 10 relativ zum Substrat 9 angibt und die Fokussierung des Objektivs 10 auf die Substratoberfläche kontrolliert und regelt. An dem Tragelement 15 ist neben dem Objektiv 10 eine nicht-optische Messeinrichtung 23 angeordnet, die im hier beschriebenen Ausführungsbeispiel als AFM 24 ausgebildet ist. Das AFM 24 dient zur Feinvermessung der Strukturen 19 auf der Maskenoberfläche. Mit dem Objektiv 10 kann man den Durchsatz optimieren, indem man den Messbereich des AFM-Systems maximal im Ort (durch ein Messfenster) als auch in der Höhe (durch einen Fokusbereich) einschränkt. Eine Feinvermessung der gesamten Oberfläche des Substrats 9 wäre mit dem AFM viel zu zeitaufwendig. Nur mit einer starren Kopplung von Antastsystemen und den Interferometerspiegeln 13ₘₓ, 13_{my}, 16ₘₓ und 16_{my} lassen sich Positionen exakt messen, und so das AFM 24 exakt in dem optisch gefundenen Messfenster positionieren.

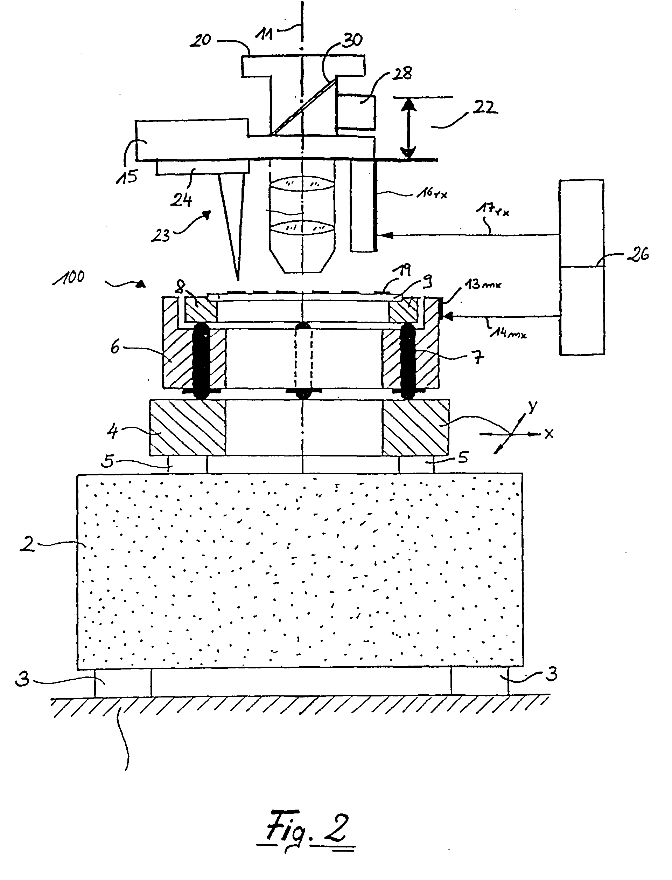

In einem zweiten Ausführungsbeispiel, wie in Fig. 2 dargestellt, wird das Substrat 9 im Auflicht beleuchtet und die verfeinerte Messung ebenfalls mittels des AFMs 24 durchgeführt. Der Einfachheit halber werden für identischen Bauteile bei den unterschiedlichen Ausführungsformen gleiche Bezugszeichen verwendet. Eine Beleuchtungseinheit 28 für die Beleuchtung des Substrats 9 mit Auflicht ist am Positionsdetektor 20 vorgesehen. Im Positionsdetektor 20 ist ein halbdurchlässiges optisches Element 30 vorgesehen, mit dem die Beleuchtung durch das Objektiv auf die Oberfläche des Substrats 9 gerichtet wird.

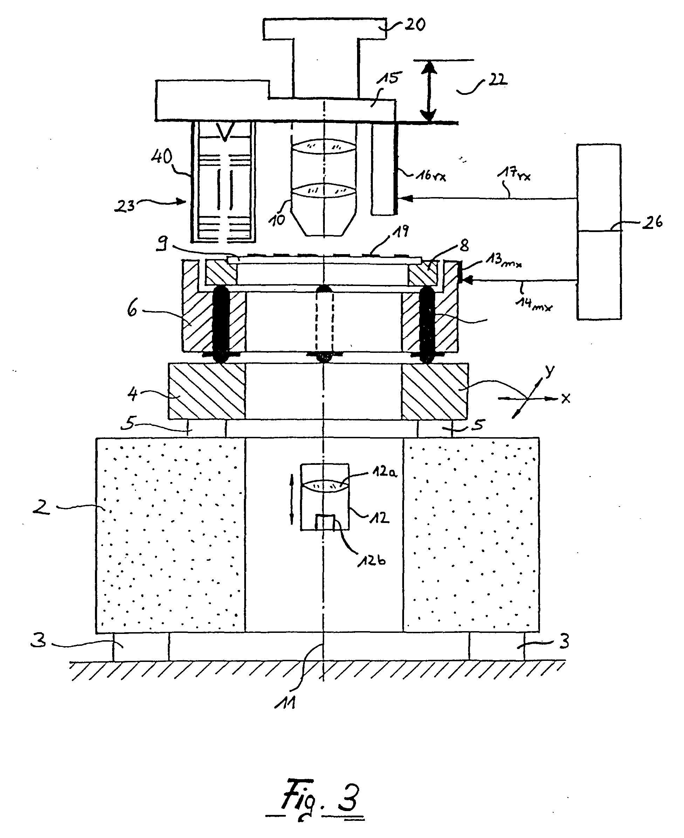

Fig. 3 zeigt die dritte Ausführungsform der Erfindung, bei dem neben dem Objektiv 10 ein Elektronenstrahlobjektiv 40 am Tragelement 15 vorgesehen ist. Elektronenoptische Systeme sind zur Zeit weit entwickelt und mit Hilfe der Mikrostrukturtechnik lassen sich die Elektronenstrahlobjektive hinreichend klein fertigen. In diesem Ausführungsbeispiel ist die nicht-optische Messeinrichtung 23, wie bereits oben erwähnt, in Form des Elektronenstrahlobjektivs 40 ausgebildet. Das Elektronenstrahlobjektiv 40 bildet eine besonders vorteilhafte Kombination mit dem Objektiv 10. Eine Feinvermessung ausschließlich mit dem Elektronenstrahlobjektiv 40 ist möglich. Bei der Kombination Objektiv 10 mit dem Elektronenstrahlobjektiv 40 werden Aufladungen durch den Elektronenstrahl minimiert, da für einen möglichst großen Teil des Messvorgangs (wie z.B. Fokussieren, Feinjustage des Messfeldes, ...) optische Verfahren verwendet werden.

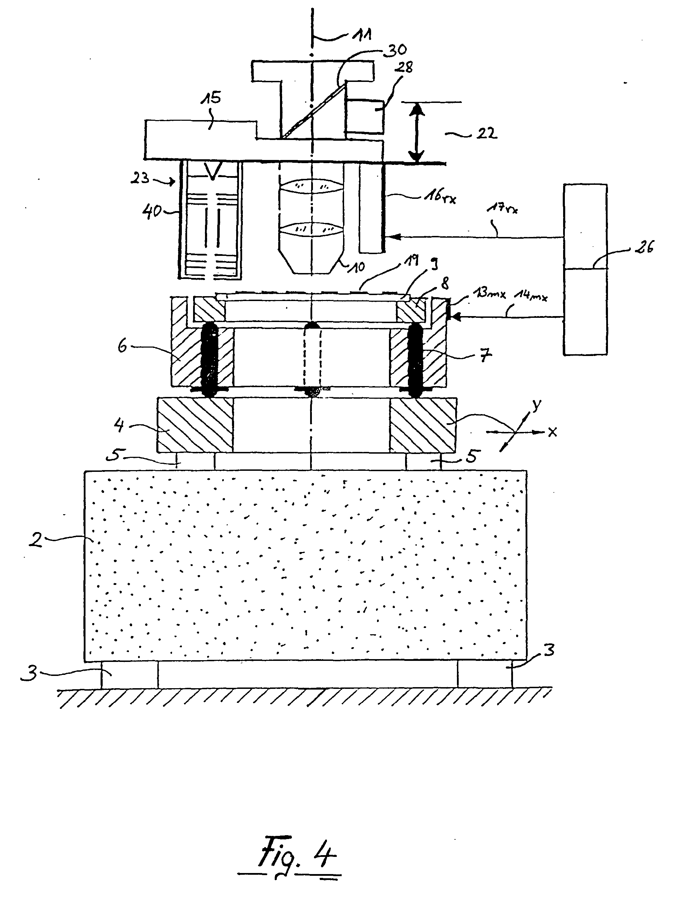

Fig. 4 zeigt das vierte Ausführungsbeispiel der Erfindung. Hier ist ebenfalls, wie bereits in Fig. 2 erläutert, eine Beleuchtungseinheit 28 am Positionsdetektor 20 vorgesehen. Diese Anordnung dient somit zur Beleuchtung des Substrats 9 mit Auflicht.

Neben den hier beschriebenen nicht-optischen Messsystemen, wie z.B. AFM und Elektronenstrahl, finden weitere Messsysteme Anwendung. Eines davon ist z.B. das Photon Tunnel Mikroskop. Weiter ist zu bemerken, dass alle zur Anwendung kommenden, nicht-optischen Messsysteme geeignet sind, ein Substrat 9 unter normalen Luftduckbedingungen zu vermessen. Eine Umhüllung des gesamten Messgeräts 100 mit einer Kammer zum Evakuieren ist hier nicht erforderlich.

Bei erfindungsgemäßen Messverfahren kann mit dem Objektiv 10 der Durchsatz an zu vermessenden Substraten 9 erhöht und auch optimiert werden. Hierbei wird der Messbereich des AFMs maximal im Ort (durch ein Messfenster) als auch in der Höhe (durch einen Fokusbereich) einschränkt.

Nur mit einer starren Kopplung der beiden Messsysteme und der Interferometerspiegel 16rx und 16ry lassen sich Positionen exakt messen. Das AMF wird entsprechend der reinen optischen Messung exakt in dem optisch gefundenen Messfenster positioniert.

Ein mögliches Ausbildungsbeispiel für ein Messverfahren mit einem AFM ist im Folgenden erläutert. Das Substrat 9 wird durch das Objektiv 10 angefahren. Das optische System stellt dann auf die zu vermessende Stelle des Substrats 9 scharf. Optisch werden dann die zu messenden Kanten lokalisiert. Eine Grobposition der zu messenden Struktur wird dadurch bestimmt. Um diese Grobposition wird ein Bereich festgelegt, der dann das Messfenster für das AFM 24 definiert. Das Messfenster ist somit sehr eng um die Kante definiert. Der Messtisch 4 wird dann entsprechend verfahren, damit das Messfenster unter dem AFM 24 zu liegen kommt. Nun erfolgt die exakte Vermessung der Struktur 19 im Messfenster mittels des AFMs 24. Dabei wird interferometrisch die Abweichung des Messtisches 4 von der Grobposition bestimmt und damit die exakte Position und Ausdehnung der Struktur ermittelt. Die Genauigkeit eine Systems mit einem AFM 24 könnte noch weiter erhöht werden, wenn man von einer möglichst unbeweglichen Spitze des AFM 24 ausgeht. Dann müsste das Substrat 9 durch Fahren des Messtisches 4 abgetastet werden.

Ein weiteres Ausführungsbeispiel für eine Messverfahren wird durch die in Fig. 3 und Fig. 4 dargestellten Messgeräte realisiert. Hierbei ist das AFM 24 aus Fig. 1 bzw. Fig. 2 durch ein Elektronenstrahlobjektiv 40 ersetzt. Die für das Elektronenstrahlobjektiv 40 notwendige Steuer- und Regelelektronik ist hier nicht explizit dargestellt, da sie mit der Elektronik für herkömmliche Raster-Elektronenmikroskope vergleichbar und somit dem Fachmann hinreichend bekannt ist. Das Messverfahren unter Verwendung eines Elektronenstrahlobjektivs 40 benötigt nicht unbedingt ein zusätzliches optischen Antastverfahren durch das Objektiv 10. Das Elektronenstrahlobjektiv 40 wird über die Oberfläche des Substrats 9 verfahren und dabei werden die Positionen der Kanten der Strukturen 19 und die entsprechenden Strukturbreiten bestimmt. Die durch den Elektronenstrahl des Elektronenstrahlobjektivs 40 verursachte Aufladung der Oberfläche des Substrats 9 ist bereits reduziert, da zum einen das Elektronenstrahlobjektiv 40 mit einer geringen Spannung betrieben wird und zwischen der Oberfläche des Substrats 9 und dem Elektronenstrahlobjektiv 40 kein Vakuum vorherrscht. Die dort ionisierten Luftmoleküle transportieren zusätzlich die überschüssige Ladung ab und sorgen somit für eine weitere Reduzierung der Aufladung des Substrats 9.

Auch hier ist dennoch eine vorteilhafte Kombination mit einem Objektiv 10 denkbar. Mit dem Objektiv 10 könnte die Oberfläche des Substrats 9 beobachtet und das entsprechende Messfenster für das Elektronenstrahlobjektiv 40 schnell aufgefunden werden. Die durch den Elektronenstrahl verursachten Aufladungen könnten somit noch weiter minimiert werden, indem ein großer Teil des Messvorgangs (z.B. Fokussieren, Feinjustage des Messfeldes, ...) mit dem Objektiv 10, also optisch, durchgeführt wird.

Auch ist hier ebenso wie bei dem AFM der Durchsatzvorteil von Nutzen. Insbesondere kann durch mehrfaches Abscannen des Substrats 9 und durch statistische Methoden bei der Auswertung der Scans eine weitere Verringerung der Messfehler erzielt werden.

Die vorliegende Erfindung ist in Bezug auf Ausführungsbeispiele beschrieben worden. Es ist jedoch für jeden auf diesem Fachgebiet tätigen Fachmann offensichtlich, dass Änderungen und Abwandlungen vorgenommen werden können, ohne dabei den Schutzbereich der nachstehenden Ansprüchen zu verlassen.

### Bezugszeichenliste:

- 2: Granitblock
- 3: Fuß
- 4: Messtisch
- 5: Luftlager
- 6: Spiegelkörper
- 7: Bolzen
- 8: Aufnahme
- 9: Substrat
- 10: Objektiv
- 11: optischen Achse
- 12: Beleuchtungseinrichtung
- 12a: Kondensor
- 12b: Lichtquelle
- 13ₘₓ: Messspiegel für
x-Richtung
- 13_{my}: Messspiegel für
y-Richtung
- 14ₘₓ: Interferometer-Messstrahl für x-Position
- 14_{my}: Interferometer-Messstrahl für y-Position
- 14: Detektor-Einrichtung.
- 15: Tragelement
- 16ᵣₓ: Referenzspiegel der x-Achse
- 16_{ry}: Referenzspiegel der y-Achse
- 17ᵣₓ: Referenzstrahlengang
- 17_{ry}: Referenzstrahlengang
- 19: Strukturen
- 20: Positionsdetektor
- 22: Fokuspositionsgeber
- 23: nicht-optisches Messsystem
- 24: AFM
- 26: Interferometer
- 28: Beleuchtungseinheit
- 30: optisches Element
- 40: Elektronenstrahlobjektivs
- 100: Messgerät
- x: Pfeil in x-Richtung
- y: Pfeil in y-Richtung

## Patentansprüche

1. Ein Messgerät (100) zum Vermessen von Strukturen (19) auf einem Substrat (9), **dadurch gekennzeichnet,**
a) dass ein Tragelement (15) gegenüber dem Substrat (9) vorgesehen ist,
b) und dass eine nicht-optische Messeinrichtung (23) am Tragelement (15) angebracht ist,
c) wobei normale Luftdruckbedingungen zwischen der nicht-optischen Messeinrichtung (23) und dem Substrat (9) vorherrschen.

2. Messgerät nach Anspruch 1, **dadurch gekennzeichnet,**
dass die nicht-optische Messeinrichtung (23) ein AFM (24) ist.

3. Messgerät nach Anspruch 1, **dadurch gekennzeichnet,**
dass die nicht-optische Messeinrichtung (23) aus einem Elektronenstrahlobjektiv (24) besteht.

4. Messgerät nach einem der Ansprüche 2 oder 3, **dadurch gekennzeichnet,**
dass zusätzlich zu der nicht-optischen Messeinrichtung (23) ein optisches Objektiv (10) vorgesehen ist, das zum schnellen Auffinden von Strukturen (19) auf dem Substrat (9) dient.

5. Messgerät nach Anspruch 4, **dadurch gekennzeichnet,**
dass an dem Tragelement (15) nebeneinander die nicht-optische Messeinrichtung (23) und das Objektiv (10) angebracht und dadurch starr miteinander verbunden sind.

6. Messgerät nach Anspruch 1, **dadurch gekennzeichnet,**
dass ein verfahrbarer Messtisch (4) vorgesehen ist, auf den die zu vermessenden Substrate (9) ablegbar sind, und dass ein Interferometer (26) vorgesehen ist, das die Sollposition des Messtisches (4) bestimmt.

7. Messgerät nach Anspruch 5, **dadurch gekennzeichnet,**
dass das Interferometer (26) ebenfalls die Position des Tragelements (15) bestimmt und kontrolliert.

8. Messgerät nach Anspruch 5, **dadurch kennzeichnet,**
dass am Tragelement (15) ein Fokuspositionsgeber (22) angebracht ist, der die Fokusposition des Objektivs (10) relativ zum Substrat (9) angibt und das Objektiv (10) auf das Substrat (9) fokussiert.

9. Verfahren zum Vermessen von Strukturen (19) auf einem Substrat (9), **gekennzeichnet durch** die folgenden Schritte:
a) Anfahren der zu vermessenden Struktur (19) unter Umgebungsluftdruck
b) Ermitteln einer Grobposition der Struktur (19) auf dem Substrat,
c) Vermessen der angefahrenen Struktur (19) mit einer nicht-optischen Messeinrichtung (23) unter Umgebungsluftdruck, und
d) Bestimmen der exakten Position und Ausdehnung der Struktur (19).

10. Verfahren nach Anspruch 9, **gekennzeichnet durch** die folgenden Schritte:
a) Positionieren des Substrates (9) auf einem in x- und y-Richtung beweglichen Messtisch (4), und
b) Ermitteln der exakten Position der Struktur (9) aus der durch das Inferterometer ermittelten Position des Messtisches (4) und der Position der nicht-optischen Messeinrichtung (23)

11. Verfahren nach Anspruch 10, **dadurch gekennzeichnet,**
dass das Anfahren der zu vermessenden Struktur mittels eines Objektivs (10) erfolgt.

12. Verfahren nach Anspruch 9, **dadurch gekennzeichnet,**
dass die nicht-optische Messeinrichtung (23) als AFM (24) ausgebildet ist.

13. Verfahren nach Anspruch 9, **dadurch gekennzeichnet,**
dass die nicht-optische Messeinrichtung (23) als Elektronenstrahlobjektiv (40) ausgebildet ist.

14. Verfahren nach Anspruch 9, **dadurch gekennzeichnet,**
dass ein Tragelement (15) gegenüber dem Substrat (9) vorgesehen ist, dass die nicht-optische Messeinrichtung (23) und ein Objektiv (10) nebeneinander am Tragelement (15) derart angebracht sind, dass die nicht-optische Messeinrichtung (23) und das Objektiv (10) starr miteinander verbunden sind.

15. Verfahren nach Anspruch 14, **dadurch gekennzeichnet,**
dass am Tragelement (15) ein Fokuspositionsgeber (22) angebracht ist, der die Fokusposition des Objektivs (10) zum Substrat (9) einstellt.
